# EUROPÄISCHE PATENTSCHRIFT

(11) **EP 3 334 317 B1**
(45) Veröffentlichungstag und Bekanntmachung des Hinweises auf die Patenterteilung: **29.09.2021**
(21) Anmeldenummer: 16748307.2
(22) Anmeldetag: 09.08.2016
(51) Int. Cl.: A47J 37/06, A47J 37/07

(54) **HOCHTEMPERATUR-GRILLGERÄT**
HIGH-TEMPERATURE GRILLING APPLIANCE
GRIL À HAUTE TEMPÉRATURE

(30) Priorität: 10.08.2015 DE 102015113172
(43) Veröffentlichungstag der Anmeldung: 20.06.2018
(73) Patentinhaber: IBK Industriebedarf GmbH, 61184 Karben (DE)
(72) Erfinder: KLEINSCHMIDT, Dieter, 61184 Karben (DE)
(74) Vertreter: Boult Wade Tennant LLP
(86) Internationale Anmeldenummer: PCT/EP2016/068987
(87) Internationale Veröffentlichungsnummer: WO 2017/025543

(56) Entgegenhaltungen:
- CH-A- 339 352
- DE-U1-202013 003 911
- FR-A1- 2 975 883

## Beschreibung

Die vorliegende Erfindung befasst sich mit einem Hochtemperatur-Grillgerät mit einem Garraum und einer Oberhitze erzeugenden Wärmequelle.

Ein derartiges Grillgerät ist beispielsweise aus der DE 20 2013 003 911 U1 bekannt. Das dort beschriebene Grillgerät weist ein Gasbrennerelement an der Oberseite des Grillraums/Garraums auf, der eine Temperatur von ca. 800°C erzeugt.

Der Vorteil derartiger Gas-Grillgeräte besteht darin, dass Fleisch, insbesondere Rinder-Steaks sowie Schweine- und Lammfleisch als auch Fisch und Meeresfrüchte, wie z. B. Thunfisch, Lachs, Jakobsmuscheln, Garnelen, auch, Gemüse, bis hin zur Creme Brulee und vielem Anderen perfekt gelingen. Sogar Pommes Frites können, ohne Fett, zubereitet werden.

Das Grillgerät ist auch bestens dazu geeignet, Sous Vide oder Niedertemperatur gegartes Fleisch mit einer perfekten Kruste zu veredeln.

Die Krustenbildung (Maillard-Reaktion) wird erhöht. Das Eiweiß gerinnt sofort, die Oberfläche wird verschlossen, die Säfte bleiben im Fleisch. - Das Fleisch wird saftiger, Vitamine und Geschmackstoffe bleiben im Grillgut enthalten. Es tritt kaum ein Gewichtsverlust auf. Die Garzeit wird beschleunigt.

Mit einem derartigen Grillgerät ist man nun endlich in der Lage auch dünne Fleischstücke perfekt zu grillen, da das Fleisch durch die hohe Temperatur nur sehr kurz braucht um außen perfekt knusprig zu sein und innen dennoch von Rare bis Medium zubereitet werden kann.

Die Oberhitze verhindert dabei, dass herabtropfender Fleischsaft verbrennt und dadurch gesundheitsschädliche Dämpfe an das Grillgut gelangen.

Der Grillrost nimmt je nach Ausführung, für den Haushalt oder für die Gastronomie, ein bis mehrere Stücke Fleisch auf.

Der Nachteil derartiger Gas-Grillgeräte besteht darin, dass erhebliche Gefahrenhinweise beachtet werden müssen, von denen die gravierendsten Hinweise hier genannt werden:
- Das Gas-Grillgerät darf nur im Freien mit ausreichender Belüftung betrieben werden.
- Das Gas-Grillgerät muss windgeschützt geschützt aufstellt werden, da Wind die Flamme ausblasen könnte.
- Flüssiggas ist leicht entzündlich und hoch explosiv.
- Flüssiggas ist schwerer als Sauerstoff und kann im Bodenbereich von Senken oder z. B. in kleinen schlecht belüfteten Innenhöfen beim unkontrollierten Ausströmen zu gesundheitsschädlichen Gaskonzentrationen führen.
- Man muss darauf achten, dass kein Flüssiggas unkontrolliert ausströmt.
- Eine zu hohe Gaskonzentration kann zur Erstickung durch Sauerstoffmangel führen.
- Beim Gebrauch der Gasflaschen ist auf die Vorgaben des Herstellers oder Verleihers der Gasflaschen zu achten.
- In der Nähe des Gas-Grillgerätes sollten sich beim Anschließen der Gasflasche keine Zündquellen befinden, vor allem kein offenes Feuer oder brennende Zigaretten, Kerzen, Lampen etc. Auch elektrische Geräte können eine Gefahr darstellen, falls beim Anschließen Gas ausströmt.
- Vor jeder Inbetriebnahme müssen die Gasleitungen und Anschlüsse überprüft werden.
- Nach längerer Pause muss bei einem Gas-Grillgerät im Bereich des Brenners und des Venturirohres nach Spuren von Fremdköpern wie z.B. Insekten gecheckt werden, welche die Gaszufuhr verstopfen könnten.
- Bei poröser oder defekter Gasleitung darf das Gas-Grillgerät nicht in Betrieb genommen werden.
- Sollte die Schlauchleitung ein maximales Verwendungsdatum besitzen, wenn nationale Bestimmungen dieses erfordern und/oder deren Gültigkeit oder poröse oder beschädigte Stellen aufweisen, so ist diese rechtzeitig auszutauschen.
- Dichtheitsprüfung: Nach dem Erstanschluss, nach jedem Wechsel der Gasflasche oder längerer Pause mit dem Gas-Grillgerät ist eine Dichtheitsprüfung aller gasführenden Komponenten mit einem Lecksuchspray durchzuführen. Bei Zweifeln muss ggf. ein Fachbetrieb mit dem Anschluss der gasführenden Komponenten beauftragt werden.

Darüber hinaus hat das Gas-Grillgerät keine direkte Temperaturregelung. Die für das jeweilige Grillgut benötigte richtige Temperatur muss empirisch durch den Abstand zum Brenner ermittelt werden.

Die aus dem Lebensmittelbereich bekannten elektrischen Heizeinrichtungen sind nicht geeignet, die für das Hochtemperaturgrillen erforderlichen Temperaturen zu erzeugen. Bekannt sind beispielsweise Rohr- und Flächenheizkörper (Widerstandsheizungen) aus Backöfen zur Erzeugung von Oberhitze, deren obere Temperaturgrenze aber selbst in dem Falle, dass die Öfen für eine selbstreinigende Pyrolyse ausgelegt sind, bei kurzzeitig maximal 500°C endet.

Aus der CH 339 352 ist ein gasbetriebener Grill bekannt, der Unterhitze erzeugt. Die FR 2 975 883 A beschreibt einen Gastro-Salamanderofen ohne einen ausgebildeten Grill-/Garraum.

Die Aufgabe der vorliegenden Erfindung besteht darin, ein Hochtemperatur-Grillgerät zu schaffen, das im Haushalt oder in der Gastronomie eingesetzt werden kann, ohne dass die oben aufgeführten Nachteile des Gas-Grillgerätes zum Tragen kommen.

Erfindungsgemäß wird die Aufgabe dadurch gelöst, dass die Wärmequelle bei einem Hochtemperatur-Grillgerät der eingangs genannten Art wenigstens einen elektrisch betriebenen Hochtemperatur-Infrarot-Flächenstrahler aufweist, der oberhalb des Garraums angeordnet ist und die zum Zubereiten von Speisen erforderliche Heizleistung als Infrarot-Wärmestrahlung von oben in den Grill/Garraum strahlt, wobei der Hochtemperatur-Infrarot-Flächenstrahler keramisch ist und das Hochtemperatur-Grillgerät ein Gehäuse mit dem Garraum aufweist, wobei das Gehäuse eine linke Seitenwandung und eine rechte Seitenwandung aufweist. Der elektrische Anschluss kann für Privathaushalte auf ein Haushaltsstromnetz ausgelegt sein, für das Gastronomiegewerbe auf einen Starkstromanschluss ausgelegt sein.

Es hat sich gezeigt, dass die Verwendung von bisher ausschließlich im industriellen Bereich eingesetzten keramischen Infrarot-Flächenstrahlern in einem Grillgerät zum Erhitzen/Grillen von Speisen mittels Oberhitze zu hervorragenden Ergebnissen führt. Obgleich derartige Infrarot-Flächenstrahler bisher im gewerblichen Bereich zu Wärme- und Trocknungsprozessen jeglicher Art eingesetzt worden sind, eignen sie sich hervorragend als Hochtemperatur-Wärmequelle in Grillgeräten auch im Haushaltsbereich. Dabei kommt Ihnen zugute, dass durch die keramischen Oberflächen eine auch im privaten Bereich sichere Verwendung ermöglicht ist.

Die Anzahl der eingesetzten Flächenstrahler richtet sich zum einen nach deren Abmessungen und zum anderen nach der Größe des Grillgerätes. Typische Anwendungen setzen zwei längliche Flächenstrahler ein, die nebeneinander an der Oberseite des Grillraumes angeordnet sind. Für die Gastronomie kann die Strahlerfläche auch kundenspezifisch erweitert werden.

Die Temperatur des wenigstens einen Infrarot-Flächenstrahlers erreicht im Betrieb 800°C (bis zu maximal 860°C) wobei eine gewisse Sicherheit zur maximalen Strahler-Temperatur von 900°C gegeben ist, um die Lebensdauer der Strahler nicht unnötig einzuschränken, zumal eine Temperatur von > 800°C ausreichend ist, um das Grillgut in der gewünschten Art und Weise zuzubereiten.

Eine weitere bevorzugte Ausführungsform der Erfindung sieht vor, dass die Temperatur des wenigstens einen Infrarot-Flächenstrahlers über einen Temperaturregler vorzugsweise im Zusammenwirken mit einem Sensor (Thermoelement) als Sollwertgeber eingestellt und geregelt werden kann.

Ein großer Vorteil der gewählten Infrarot-Flächenstrahler besteht darin, dass über eine elektrische Steuerung, z. B. bestehend im Wesentlichen aus Temperaturregler, Sensor (Thermoelement) und Solid State Relais oder Thyristorsteller, gezielt über den gesamten Temperaturbereich jede Temperatur für das gewählte Grillgut einstellbar ist.

Der Nutzer braucht sich nicht umständlich mit Abständen zwischen Wärmequelle und Grillgut zu befassen um Temperaturen zu regeln, wie es bei den bisher üblichen, in der Temperatur nicht regelbaren Gas-Grillgeräten der Fall ist. Beispielsweise kann in dem wenigstens einen Flächenstrahler ein Sensor zur Temperaturerfassung vorgesehen sein, der mit der elektronischen Ansteuerung einen Regelkreis bildet, so dass die Temperatur entsprechend vorwählbar ist. Der Einstellbereich der Temperatur liegt vorzugsweise in einem Bereich bis zu 850°C.

Eine besonders bevorzugte Vorrichtung zur Höhenverstellung sieht vor, dass die Rostaufnahme mit einem Spindeltreib wie z. B. Scherenmechanismus (Scherentisch) verbunden ist, der eine Drehspindel aufweist, die über Gewindemutter und Gestänge des Scherenmechanismus mit diesem zusammenwirkt.

Eine derartige Vorrichtung, erlaubt eine präzise Höheneinstellung des Grillrostes.

Nachfolgend wird anhand der beigefügten Zeichnungen näher auf ein Ausführungsbeispiel der Erfindung eingegangen. Es zeigen:
- Fig. 1: eine Ansicht eines Hochtemperatur-Grillgerätes;
- Fig. 2: eine Ansicht des Grillgerätes aus Fig. 1 mit entfernter Strahlerblende;

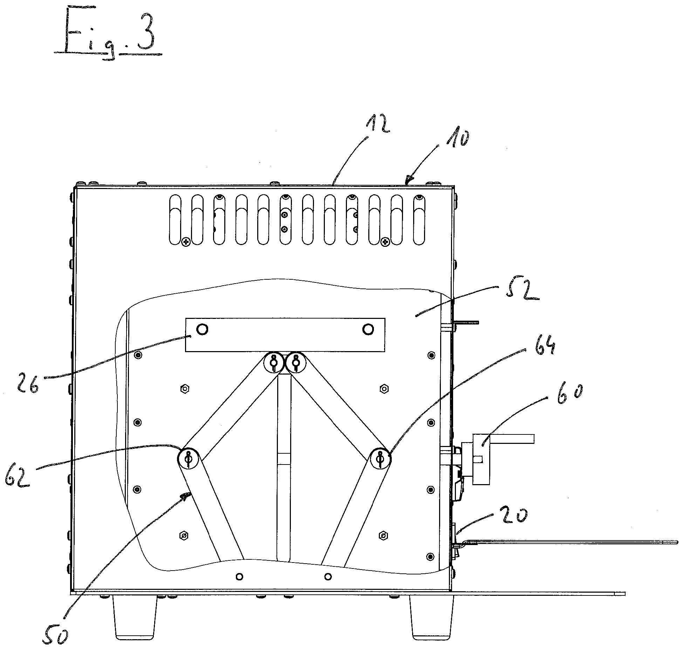

- Fig. 3: eine aufgebrochene Seitenansicht mit einem Mechanismus zur Höhenverstellung;
- Fig. 4: eine Ansicht des Mechanismus aus Fig. 3 als "Spindeltrieb".

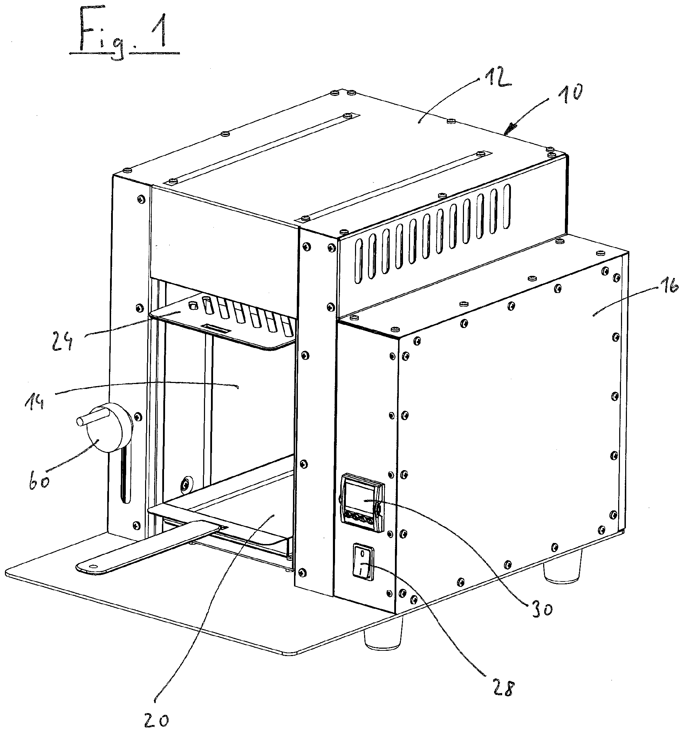

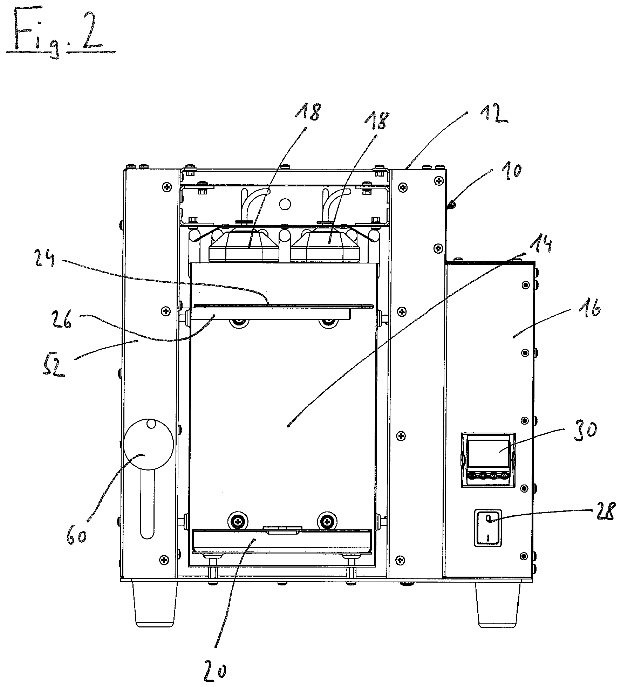

In Fig. 1 ist ein Hochtemperatur-Grillgerät 10 gezeigt, das ein Gehäuse 12 mit einem Grillraum/Garraum 14 aufweist. An das Gehäuse 12 ist eine Steuervorrichtung 16 angebracht, die zur Temperatur-Steuerung von Infrarot-Flächenstrahlern 18 vorgesehen ist (siehe Fig. 2).

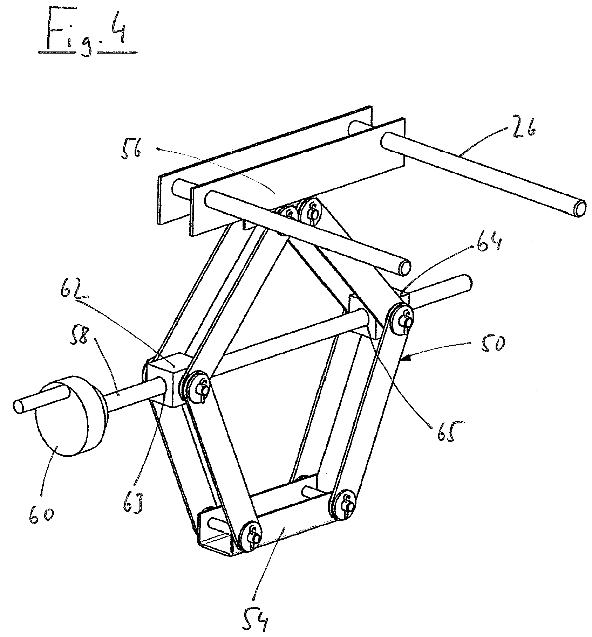

Im Grillraum/Garraum 14 ist eine Auffangwanne 20 im Bereich des Bodens zur Aufnahme von herabtropfender Flüssigkeit (Fleischsaft) vorgesehen, während weiter oben ein Grillrost 22 angeordnet ist, der auf einer Rostaufnahme 24 (siehe Fig. 4) aufgelagert ist.

Wie aus dem Teilausschnitt in Fig. 2 zu erkennen ist, sind an der Oberseite des Grillraumes 14 die Infrarot-Flächenstrahler 18 angeordnet. Diese Infrarot-Strahler können Temperaturen bis zu 900°C erzeugen, wobei typische Betriebstemperaturen bis maximal 860°C eingestellt werden, um die Lebensdauer dieser Strahler nicht einzuschränken.

Mit Hilfe der elektrischen Steuerung 16, die im wesentlichen aus einem Hauptschalter 28, einem Temperaturregler 30 und einem Solid State Relais (Thyristorsteller) besteht, ist es möglich jede gewünschte Temperatur innerhalb des zulässigen Arbeitsbereiches einzustellen. Bei einer maximalen Leistung wird am Infrarot-Strahler die Temperatur von > 800°C erreicht.

Durch die individuelle einstellbare Temperatur 30 zum Einen und der individuellen HöhenPositionierung des Grillrostes 24 unter der Wärmequelle "IR-Strahler 18" zum Anderen ist eine optimale Zubereitung des Grillgutes (Fleisch, Gemüse und andere Lebensmittel) möglich. Der optimale Gar-Ablauf des Grillgutes kann perfekt umgesetzt werden, egal ob es sich um dünnes oder dickes Grillgut, um Fleisch oder Gemüse handelt.

Um das Grillgut (Fleisch, Gemüse, usw.) oder z. B. die zu karamellisierende Creme Brulee einfach auf die Rostaufnahme 26 auflegen zu können, ist in der bezogen auf die Blickrichtung gemäß Fig. 2 linken Seitenwandung 52 des Gehäuses 10 ein Spindeltischmechanismus 50 zur Höhenverstellung vorgesehen. Ähnlich dem Scherenheberprinzip ist eine untere Auflagerung 54 in der Seitenwandung 52 im unteren Bereich des Grillraumes angeordnet, während eine obere, verstellbare Auflagerung 56 mit der Rostaufnahme 26 verbunden ist. Eine Gewindespindel 58, die mittels eines an der Stirnseite des Gehäuses 12 vorgesehenen Kurbel oder dergleichen gedreht werden kann, steht in einem hinteren Gelenk 62 des Scherenmechanismus 50 mit einem ersten Gewindeabschnitt mit einer ersten Gewindemutter 63 in Eingriff, während sie an einem vorderen Gelenk 64 mit einem zweiten Gewindeabschnitt mit gegenläufiger Steigung mit einer zweiten Gewindemutter 65 im Eingriff steht. Durch ein Drehen der Gewindespindel 58 lässt sich entsprechend der Scherenmechanismus spreizen und die Höhe der Rostaufnahme 26 verstellen. Selbstverständlich ist auch ein elektromotorischer Antrieb der Gewindespindel möglich.

Für die Höhenverstellung die manuell oder elektrisch ausgelegt sein kann sind auch andere Mechanismen möglich, beispielsweise vertikale Spindeltriebe oder eine einfache Linearführung, die durch einen Klemmmechanismus in verschiedenen Höhen verriegelt werden kann.

## Patentansprüche

1. Hochtemperatur-Grillgerät mit einem Grillraum/Garraum (14) und einer Oberhitze erzeugenden Wärmequelle (18), die wenigstens einen elektrisch betriebenen Hochtemperatur-Infrarot-Flächenstrahler aufweist, der oberhalb des Garraums angeordnet ist und die zum Zubereiten von Speisen erforderliche Heizleistung als Infrarot-Wärmestrahlung von oben in den Grill/Garraum (14) strahlt, **dadurch gekennzeichnet, dass** der Hochtemperatur-Infrarot-Flächenstrahler keramisch ist und das Hochtemperatur-Grillgerät ein Gehäuse (12) mit dem Garraum (14) aufweist, wobei das Gehäuse (12) eine linke Seitenwandung (52) und eine rechte Seitenwandung aufweist.

2. Hochtemperatur-Grillgerät nach Anspruch 1, **dadurch gekennzeichnet, dass** zwei oder mehrere Infrarot-Flächenstrahler (18) vorgesehen sind.

3. Hochtemperatur-Grillgerät nach Anspruch 1 oder 2, **dadurch gekennzeichnet, dass** die Temperatur des wenigstens einen Infrarot-Flächenstrahlers bis 900°C (Betriebstemperatur bis 860°C) beträgt.

4. Hochtemperatur-Grillgerät nach Anspruch 3, **dadurch gekennzeichnet, dass** die Temperatur des wenigstens einen Infrarot-Flächenstrahlers (18) mittels eines Temperaturreglers (30) einstellbar ist.

5. Hochtemperatur-Grillgerät nach Anspruch 4, **dadurch gekennzeichnet, dass** in dem wenigstens einen Flächenstrahl-Infrarot-Flächenstrahler (18) ein Sensor (Thermoelement) zur Temperaturerfassung vorgesehen ist, der mit dem Temperaturregler (30) zusammenwirkt.

6. Hochtemperatur-Grillgerät nach Anspruch 4 oder 5, **dadurch gekennzeichnet, dass** der Einstell- und Regelbereich der Temperatur bis 860°C reicht.

7. Hochtemperatur-Grillgerät nach einem der vorhergehenden Ansprüche, **dadurch gekennzeichnet, dass** in dem Grillraum/Garraum (14) ein höhenverstellbarer Einschub für das Grillgut vorgesehen ist.

8. Hochtemperatur-Grillgerät nach Anspruch 7, **dadurch gekennzeichnet, dass** der Einschub im Garraum ein- oder beiseitig an einer Rostaufnahme (26) abgestützt ist.

9. Hochtemperatur-Grillgerät nach Anspruch 8, **dadurch gekennzeichnet, dass** eine Höhenverstellung der Rostaufnahme mit einem Spindeltrieb (58) vorgesehen ist.

10. Hochtemperatur-Grillgerät nach Anspruch 9, **dadurch gekennzeichnet, dass** die Rostaufnahme (26) mit einem Scherenmechanismus (50) verbunden ist, der durch eine Gewindespindel (58) des Spindeltriebes höhenverstellbar ist.

11. Hochtemperatur-Grillgerät nach einem der Ansprüche 7 bis 10, **dadurch gekennzeichnet, dass** die Höhenverstellung einen manuellen oder einen elektromotorischen Antrieb aufweist.

## Claims

1. High-temperature grilling appliance having a grilling chamber/cooking chamber (14) and a heat source (18) that generates top heat, which heat source has at least one electrically operated high-temperature infrared surface radiator that is arranged above the cooking chamber and that radiates the heating power necessary for preparing food, in the form of infrared heat radiation, into the grilling/cooking chamber (14) from above, **characterised in that** the high-temperature infrared surface radiator is ceramic and the high-temperature grilling appliance has a housing (12) having the cooking chamber (14), wherein the housing (12) has a left side wall (52) and a right side wall.

2. High-temperature grilling appliance according to claim 1, **characterised in that** two or more infrared surface radiators (18) are provided.

3. High-temperature grilling appliance according to claim 1 or 2, **characterised in that** the temperature of the at least one infrared surface radiator is up to 900°C (operating temperature up to 860°C).

4. High-temperature grilling appliance according to claim 3, **characterised in that** the temperature of the at least one infrared surface radiator (18) can be set by means of a temperature regulator (30).

5. High-temperature grilling appliance according to claim 4, **characterised in that** a sensor (thermocouple) for temperature detection is provided in the at least one surface beam infrared surface radiator (18) and cooperates with the temperature controller (30).

6. High-temperature grilling appliance according to claim 4 or 5, **characterised in that** the temperature setting and control range extends up to 860°C.

7. High-temperature grilling appliance according to any of the preceding claims, **characterised in that** a height-adjustable insert for the food to be grilled is provided in the grilling chamber/cooking chamber (14).

8. High-temperature grilling appliance according to claim 7, **characterised in that** the insert in the cooking chamber is supported on one or both sides on a grate holder (26).

9. High-temperature grilling appliance according to claim 8, **characterised in that** a height adjustment of the grate holder is provided by means of a spindle drive (58).

10. High-temperature grilling appliance according to claim 9, **characterised in that** the grate holder (26) is connected to a scissor mechanism (50) which is height-adjustable by means of a threaded spindle (58) of the spindle drive.

11. High-temperature grilling appliance according to any of claims 7 to 10, **characterised in that** the height adjustment has a manual or an electric motor drive.

## Revendications

1. Gril à haute température muni d'une enceinte de gril/enceinte de cuisson (14) et d'une source de chaleur (18) produisant une chaleur de voûte, qui présente au moins un radiateur infrarouge à haute température à fonctionnement électrique, qui est disposée au-dessus de l'enceinte de cuisson et qui diffuse une puissance de chauffage indispensable à la préparation de plats sous la forme d'un rayonnement thermique infrarouge du haut vers l'enceinte de gril/de cuisson (14), **caractérisé en ce que** la radiateur infrarouge à haute température est en céramique et le gril à haute température présente un boîtier (12) muni de l'enceinte de cuisson (14), dans lequel le boîtier (12) présente une paroi latérale gauche (52) et une paroi latérale droite.

2. Gril à haute température selon la revendication 1, **caractérisé en ce que** deux ou plusieurs radiateurs infrarouges (18) sont prévues.

3. Gril à haute température selon la revendication 1 ou 2, **caractérisé en ce que** la température de l'au moins un radiateur infrarouge s'élève jusqu'à 900 °C (température de fonctionnement jusqu'à 860 °C).

4. Gril à haute température selon la revendication 3, **caractérisé en ce que** la température de l'au moins une radiateur infrarouge (18) est réglable au moyen d'un régulateur de température (30).

5. Gril à haute température selon la revendication 4, **caractérisé en ce que** dans l'au moins un radiateur infrarouge à faisceau plat (18) un capteur (élément thermique) est prévu pour enregistrer la température, qui interagit avec le régulateur de température (30).

6. Gril à haute température selon la revendication 4 ou 5, **caractérisé en ce que** la plage de paramétrage et de réglage de la température atteint jusqu'à 860 °C.

7. Gril à haute température selon l'une quelconque des revendications précédentes, **caractérisé en ce que** dans l'enceinte de gril/l'enceinte de cuisson (14) un tiroir réglable en hauteur est prévu pour les grillades.

8. Gril à haute température selon la revendication 7, **caractérisé en ce que** le tiroir dans l'enceinte de cuisson est appuyé d'un côté ou des deux côtés contre un logement de récupération de grille (26).

9. Gril à haute température selon la revendication 8, **caractérisé en ce qu'**un réglage en hauteur du logement de récupération de grille est prévu avec un mécanisme à broche (58).

10. Gril à haute température selon la revendication 9, **caractérisé en ce que** le logement de récupération de grille (26) est relié à un mécanisme articulé (50), qui est réglable en hauteur par une tige filetée (58) du mécanisme à broche.

11. Gril à haute température selon l'une quelconque des revendications 7 à 10, **caractérisé en ce que** le réglage en hauteur présente un entraînement manuel ou par moteur électrique.
